Europäisches Patentamt

European Patent Office

Office européen des brevets

(19)

(11) Publication number: **0 336 729**

**A2**

(12)

# EUROPEAN PATENT APPLICATION

(21) Application number: **89303346.4**

(22) Date of filing: **05.04.89**

(51) Int. Cl.⁴: **A 01 J 5/10**

(30) Priority: **06.04.88 GB 8807999**

(43) Date of publication of application:
**11.10.89 Bulletin 89/41**

(84) Designated Contracting States:
**AT BE CH DE ES FR GB GR IT LI LU NL SE**

(71) Applicant: **AMBIC EQUIPMENT LIMITED**
**Witney Oxfordshire, OX8 6XT (GB)**

(72) Inventor: **Griffin, Tony Kenneth**
**Harolds Close**
**Lea Field Oxfordshire (GB)**

(74) Representative: **Jukes, Herbert Lewis**
**Swann, Elt & Company 31 Beaumont Street**
**Oxford OX1 2NP (GB)**

(54) Improvements in or relating to automatic milking apparatus.

(57) A pulsation controller for automatic milking apparatus providing the customary "On" and "Off" electrical pulses corresponding, respectively, to "milk flow" and "no milk flow" into the relevant teat up. The controller provides variation of pulse frequency, while maintaining constant duration of "Off" pulses, and also provides for pre-set adjustment of the "Off" pulse duration then maintained constant. The pulsation controller is itself controlled by a microcomputer, which executes a stored programme to provide the set pulse sequence in quadrature at four output terminal pairs. All required intervals are achieved using 1m sec. interrupts, loading a register with the required 1m sec. number and decrementing to zero the number stored by the corresponding number of interrupts.

FIG.4.

EP 0 336 729 A2

**Description**

**Improvements in or relating to Automatic Milking Apparatus**

Description of the Invention

This invention relates to automatic milking apparatus and provides a pulsation controller for controlling the alternate vacuum and atmosphere pressure pulses to a milking machine clawpiece, both in the rate of such pulses in unit time and in the ratio of duration of the vacuum and the atmosphere pressure pulses, while preserving a preferred duration of the atmosphere pressure pulses.

Background to the Invention

Automatic milking apparatus comprises four teat cups, one for each quarter of a cow to be milked. Each teat cup comprises a rigid outer casing and an inner flexible liner, which fits over one of the cow's teats. The four teat cups are connected to a clawpiece by individual short milk tubes. Milk from all four teat cups is collected in the body of the clawpiece and passes through a long milk tube to a collecting container.

A continous vacuum of one-half atmosphere pressure, is applied, through the long milk tube, clawpiece and short milk tubes, to a core space of each flexible liner, which core space receives the cow's teat and into which milk from the teat flows. This continous vacuum both draws milk through the system and holds the teat cups onto the cow's teats.

Alternate half-atmosphere pressure vacuum and atmosphere-pressure pulses, provided by a pulsator and controlled by a pulsation controller, are applied to the annular space between the rigid casing and the flexible liner. During the half-atmosphere pressure vacuum pulses, there is zero pressure differential between the core and the annular space between the liner and casing. Milk flows from the cow's teat during this phase. During the atmosphere pressure pulses, a pressure differential of one half-atmosphere is created, the flexible liner collapses around the cow's teat and milk-flow is prevented.

This milk-flow and no-flow mode of milking provides an essential massage of the cow's teats and stimulates milk-flow. Customarily, in present automatic milking systems, the ratio of duration of half-atmosphere pressure pulses to atmosphere pressure pulsed is fixed, or pre-set fixed, by the design of the pulsation controller used.

Typically, the pulse-cycle rate of half-atmosphere vacuum and atmosphere-pressure pulses may be some 60 cycles per minute and the ratio of half-atmosphere (milk-flow) pulse duration to atmosphere pressure (no-flow) pulse duration may be some 2:1. The pulsator is itself electrically controlled by the pulsation controller. The pulsator comprises one or more electrical relay taps, depending upon whether the four teat cups are pulsed in unison, in sequence, or alternately in pairs. The relay tap, or each tap, is an electrically-controlled switch, which connects its output pulse line either to the half-atmosphere pressure vacuum source or to atmosphere. The control pulses, supplied by the pulsation controller, are typically 12 volt pulses, corresponding to the half-atmosphere vacuum pulses. Customarily, as implied above, both the "on"/"off" ratio and the cycle rate of the electrical pulses is fixed, or pre-set fixed, by the design of the pulsation controller.

However, there are some pulsation controllers available which provide for variation of the pulse rate, so that a dairy manager can choose, or experiment to find, what he considers to be the best pulse rate to suit his cows and his milking installations. Exceptionally, some control of pulse-duration ratio may be provided, but otherwise pulse rate may be changed only with constant pulse ratio. That is, if pulse rate is increased, both vacuum and atmosphere pulse duration are reduced proportionally.

It is now found, however, that pulse rate, or pulse-duration ratio, should be determined primarily with regard to cow udder health. The maintenance of a preferred duration for the collapse of the liner around the udder, that is the duration of the atmosphere-pressure (no-flow) pulse, is necessary to avoid incidence of udder infection.

Accordingly, the invention provides a pulsation controller for supplying alternate ON and OFF control pulses to a pulsator of automatic milking apparatus, with ON pulses corresponding to the supply of vacuum pulses to a teat cup and the 0FF pulses corresponding to the supply of atmosphere pressure pulses thereto, having means for varying the pulse cycle rate of ON and OFF pulses and including means for maintaining constant the duration of the OFF pulses with the variation of the pulse cycle rate.

The pulse cycle rate is therefore varied solely by varying the duration of the ON pulses, while maintaining constant the duration of the OFF pulses at a preferred duration.

The invention further provides a pulsation controller as aforesaid, including means for presetting the duration of the OFF pulses to be maintained constant at a plurality of alternative preferred durations.

Short Description of the Drawings

One embodiment of the present invention will be described, by way of example, with reference to the accompanying drawings, of which:

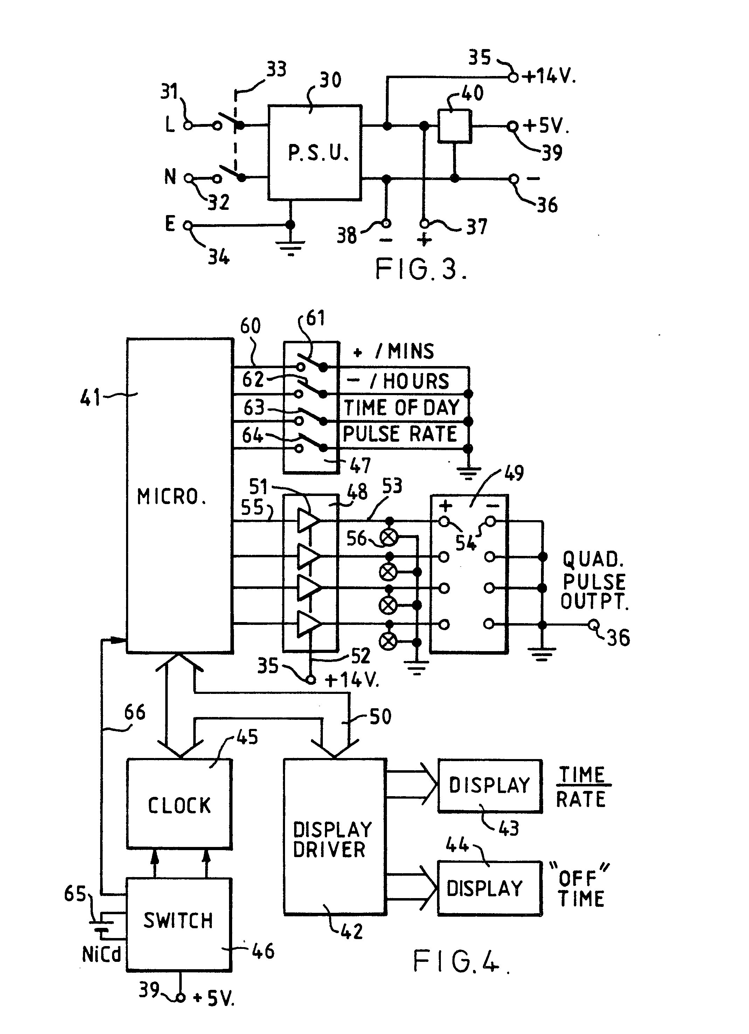

Fig 1 is a schematic diagram showing a milking installation;
Fig 2 is a cross section view on the axis on one teat cup of Fig 1;
Fig 3 is a schematic diagram of an electric power supply arrangement; and
Fig 4 is a schematic diagram of an electronic pulsation controller, based on a microcomputer unit, for

providing output control pulses from the electric power output of the supply unit of Fig 3.

Description of the Embodiment

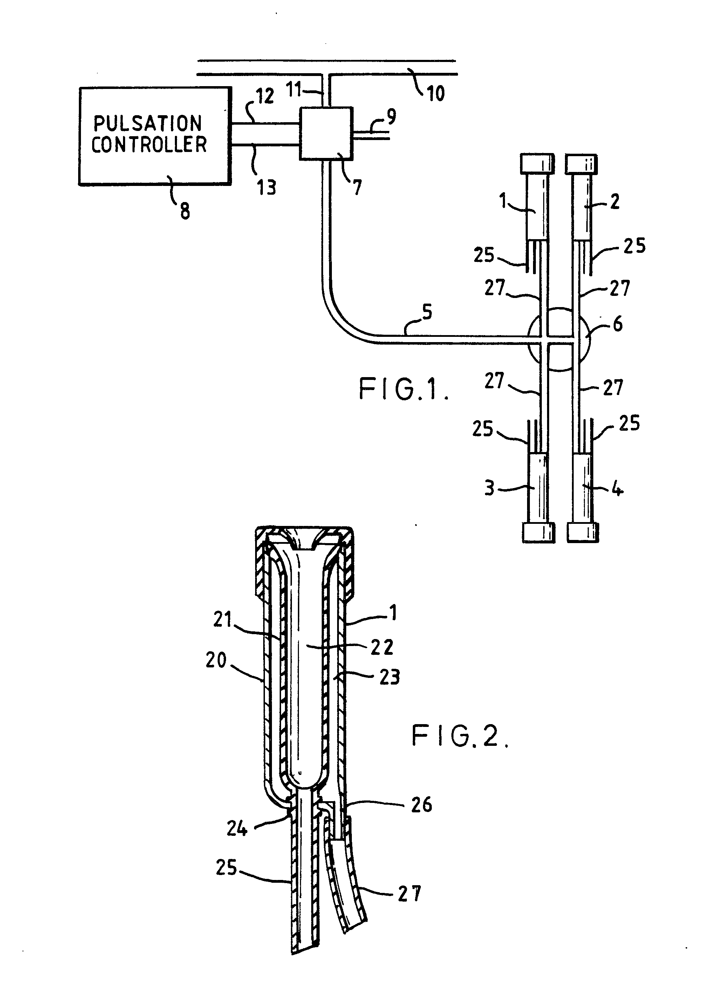

Fig 1 shows a milking installation having, for clarity in the drawing, a cluster of four teat cups 1, 2, 3 and 4, which are pulse fed in unison from a single flexible pulse tube 5, by way of a claw-piece distributor 6. A pulsator 7 is electrically controlled by a pulsation controller 8 to connect the pulse tube 5 alternately to the atmosphere at a port 9 and to vacuum at one-half atmosphere pressure in a vacuum line 10 by way of a second port 11. Electrical pulses to the pulsator 7 are supplied from the pulsation controller 8 by way of a pair of conductors 12 and 13.

Referring, now, to Fig 2, there is shown in cross-section the construction of teat cup 1 of Fig 1. Teat cups 2, 3 and 4 are of the same construction. The teat cup of 1 of Fig 2 comprises a rigid outer casing 20 and an inner flexible liner 21, which together define a core space 22 within the liner 21 and an annular space 23 between the liner 21 and the casing 20. The liner 21 extends through the base of the casing 20, at an integral grommet 24, and continues as a short milk tube 25. The bottom of the casing 20 has an inlet tube 26 providing connection to the annular space 23. The tube 26 is connected by a flexible tube 27 to the clawpiece distributor 6, but the short milk tubes 25 are not shown connected to a clawpiece, for clarity in the drawing.

It is here convenient to restate the operation of the milking system of the invention with reference to Figs 1 and 2 of the drawings. The pulsation controller provides electrical pulses of twelve volts nominal amplitude, spaced apart by intervals of zero volts, to the pulsator 7. This nominal twelve volts amplitude has been found to be a practical voltage to be obtainable, at the required amperage, from readily available lead-acid batteries as the power source, or as a standby power source.

It is customary in milking installations for the twelve volt electrical pulses to switch the pulsator 7 to supply half-atmosphere vacuum pressure to the pulse tube 5, whereas the zero volt intervals switch the pulsator 7 to supply atmosphere pressure to the pulse tube 5. The reverse mode of control is equally practicable, but the example of the present invention follows the above convention.

In the description which follows, the twelve volts pulses are referred to as ON pulses, corresponding to the supply of vacuum pulses, and the zero volt intervals are referred to as OFF pulses, corresponding to the supply of atmosphere pressure pulses.

Continuing with the description of operation, the pressure supplied to the pulse tube 5 is also supplied, by way of the claw-piece distributor 6, to the four flexible tubes 27 of the teat cup cluster 1-4, fitted around the four teats of a cow being milked. A continuous vacuum pressure of one-half atmosphere is applied to the four short milk tubes, 25. Thus, the core space 22 and the teat within are subject to a uniform vacuum pressure, whereas the annular space 23 is subject alternately to vacuum pressure and to atmosphere pressure. During vacuum pressure in the space 23, the teat cup liner 21 is held open and milk flow takes place. During atmosphere pressure in the space 23, the liner 21 collapses onto the cow's teat, by reason of the pressure difference in the core space 22 and annular space 23, and milk flow ceases. The alternate opening and collapse of the liner 21 upon the cow's teat provides the necessary massage to the teat to maintain blood circulation. The liner collapsed, no milk-flow, phase duration is found to be critical to avoid incidence of udder infection.

In following the above explanation, it should be understood that whereas the electrical pulses supplied to the pulsator 7 are of substantially square wave form, the pressure cycle in the teat cup annular space 23 is not. The pressure there progressively changes between the vacuum and atmosphere pressures. Thus, in each cycle of pressure variation, from initial atmosphere pressure, there is a first interval A during which the pressure in the annular space 23 falls to one-half atmosphere, a second interval B during which the pressure remains at one-half atmosphere, a third interval C during which the pressure returns to atmosphere pressure and a final interval D during which atmosphere pressure is maintained. It is the combined intervals C + D, which the present invention is concerned to maintain at a substantially constant interval.

In milking methods which are conventional at this time, a continuous air-bleed is provided into the milk carrying part of the system at or upstream of the claw-piece. In such systems, the present invention provides for pre-set adjustment of the no milk-flow interval the combined intervals C + D, between the values of .30 to 0.35 second and for the maintenance of that interval with variation of pulse cycle rate.

In a milking method recently introduced called "hydraulic milking", no such air-bleed is permitted upstream of the claw-piece during actual milking. Air may enter the milk-carrying part of the system during fitting or removal of the teat cups from the cow. This system does not have the same pulse interval requirements as conventional milking systems. Nevertheless, there exists a corresponding requirement for the duration of the no-milk-flow combined intervals C + D.

To provide for both conventional and "hydraulic" systems, the present example of the invention provides for pre-set variation of the no milk-flow, combined C + D interval, between 0.2 and 0.5 second and for the maintenance of the pre-set interval with pulse cycle rate variation from 20 to 120 cycles per minute.

Expressed in an alternative manner, the pulsation controller in the milking apparatus of the invention operates according to the following equation:

$$\left[\frac{A + B}{A + B + C + D}\right] \% = 5 \left[20 - \frac{R \times (C + D)}{3}\right]$$

where A, B, C and D are the intervals defined above, R is the pulse rate in cycles per minute and (C + D) is the constant, no milk-flow interval, as also defined above.

It will be convenient, with reference to Fig 1 and Fig 2 described, to summarize the function of the pulsation controller ON and OFF pulses in a table, as follows:

| Controller Pulse: | "ON" | "OFF" |
|---|---|---|
| Voltage Level: | 12V.+ | Zero |
| Liner Interior Pressure: | $\frac{1}{2}$ atmos | $\frac{1}{2}$ atmos |
| Liner Exterior-Casing Pressure: | $\frac{1}{2}$ atmos | 1 atmos |
| Liner Condition: | Distended | Collapsed |
| Milk-flow Condition: | Flow | No Flow |
| Pulse Duration: | Variable | "Fixed" |
| | or Variable | Pre-set Fixed |

Fig 3 shows the power supply arrangement used for the preferred example of the invention. A conventional power supply unit 30 is supplied from supply mains terminals 31, 32 by way of a double pole mains switch 33. The unit 30 is earthed at terminal 34. The unit 30 comprises a step-down transformer, bridge rectifier and and smoothing capacitor and provides a fourteen volts output between terminal 35 and 36.

A nominal twelve volts output at terminals 35, 36 may alternatively be supplied from a lead-acid stand-by battery connected between terminals 37 and 38. The stand-by battery is float charged from the rectified power supply when the mains supply is connected through switch 33.

A stabilised voltage-dropping unit 40 provides a control voltage of +5V at terminal 39.

Fig 4 shows, in part schematic form, the preferred example of pulsation controller, which is an electronic controller built around a number of standard I.C.s. The central unit of these is a microcomputer 41, which is a type Z8.6E21 from SGS-Thomson. This Z8 derivative includes internal ROM for programme storage, RAM for working memory, input and output ports, counter/timers and a clock pulse oscillator. It can also address external RAM and to this end is associated with a real time clock unit 45, described later.

A power driver unit 48 comprises four power transistors of which one is referred 51. The + 14V terminal 35, Fig 3, is connected to terminal 35, Fig 4, and by a line 52 to all four power transistors 51. The output lines from transistors 51, one line referred 53, are connected to an output control pulse panel 49 carrying four output pulse terminal pairs, one pair of which are referred 54. Each transistor 51 is connected to a corresponding terminal pair. Four control lines from microcomputer 41, one line referenced 55, control the gating of supply line 52 to the respective output terminals 54. A signal LED 56 between each line 53 and earth indicates when the respective line is ON.

The function of microcomputer 41 is to gate the four transistors 51 in sequence in order to provide output pulses in quadrature at the terminals 54, the pulse rate and OFF pulse duration being controlled by data entered from a four-button keypad 47.

The keypad 47 has four push-buttons connected respectively by four lines, one referred 60, to four input port pins of microcomputer 41. The four push-buttons are respectively referenced 61, 62, 63 and 64. Push-buttons 61 and 62 serve a dual function, both to control the pulse rate at terminals 54 and to reset the real time clock 45.

To vary the pulse rate, Pulse Rate button 64 is depressed. Button 61 then increments the pulse rate for so long as it is depressed. Button 62 decrements the pulse rate in similar manner.

To reset the clock 45, Time of Day button 63 is depressed. Button 61 then increments the "Minutes" setting. Button 62 increments the "Hours" setting.

The OFF pulse duration is also set from the keypad 47. The OFF time being critical and, in order to avoid accidental or unauthorised alteration, a more complicated resetting procedure is required. Both Pulse Rate button 64 and Time of Day button 63 must be depressed together for 10 seconds . Button 61 then increments the OFF pulse duration and button 62 decrements this value.

Limits are set, within the microcomputer 41 programme, for pulse rate and for OFF pulse duration values. Although either of buttons 61 and 62 continuously updates the relevant value for so long as the button remains depressed, the programme checks the resultant value. When a limit value is reached, further updating is inhibited.

All intervals required by the microcomputer 41 programme, the pulse duration intervals in particular, are set using registers available in the microcomputer 41 chip. An interval timer makes use of 1 millisecond interrupts. The relevant interval register is loaded with the number of the 1m sec intervals required by the particular interval. The register is then decremented to zero by successive interrupts to give the interval required.

A data bus 50 interconnects the microcomputer 41, clock 45 and a display driver 42. The display driver 42 controls a four-digit LED display 43 and a three-digit LED display 43.

The display driver 42 is a type ICM 7218 AIJI LED display driver supplied by G.E. Solid State. This is a display driver with a capacity to provide a multiplexed drive to eight 7-segment displays. It contains decoding logic and data registers so that data in hexadecimal format from data bus 50 is processed for display by displays 43 and 44.

Display 43 is a 4-digit 7-segment display which optionally shows Time of Day and Pulse Rate values. Display 44 is a 3-digit 7-segment display which shows the OFF pulse duration in milliseconds.

The real time clock unit 45 is an Hitachi type HD 146818 X clock which includes a crystal clock oscillator and user RAM and is designed to operate on nominal 5V d.c. but down to 2.7V standby voltage.

Terminal 39, Fig 3, carrying the +5V d.c. output is connected to terminal 39, Fig 4. A switch 46 monitors the supply voltage of +5V. When this supply voltage is present, a NiCd standby battery 65 is float-charged. If the + 5V supply fails, due to mains supply interruption to power supply unit 30, Fig 3, the battery 65 is switched into circuit to power the clock unit 45.

The value settings set by the four buttons of keypad 47 are stored in the user RAM by the clock unit 45, so that these settings are not lost when mains power is lost.

The switch 46 provides a master reset signal on line 66 to the microcomputer 41, which disables the control by the microcomputer 41 of the clock 45. This prevents the data stored in the clock 45 user RAM from being altered during power-down or power-up of the pulsation controller.

A hexadecimal switch, not shown in Fig 4, is connected to four input data pins of the microcomputer 41. This switch provides for the setting of up to sixteen values for default value of OFF pulse duration. The chosen setting is selected if the standby battery 65 fails. In normal operation, the switch setting is disabled.

When the microcomputer 41 is powered-up, the programme checks the status of clock 45. If the data stored in the clock 45 user RAM is invalid, due to standby battery 65 failure as stated, the default OFF pulse duration is selected. A default rate value is also stored, so that both pulse rate and OFF duration revert to default settings.

The microcomputer 41 programme writes the current values of pulse rate and OFF duration, whether normal operation values or default values, to the display driver 42 and hence to the relevant display 43 or 44. The programme periodically reads the Time of Day value of clock 45 and updates display 43 accordingly. In consequence, it is possible to select different stored settings of pulse rate and OFF duration for a.m. and for p.m. working:

The four-phase quadrature pulse outputs at terminals 54 enables one, two or four pulsators, such as pulsator 7, Fig 1, to be controlled, whereby a teat cup cluster may be vacuum pulsed in unison, or with teat cup pairs alternately, or with the four teat cups in sequence, respectively.

It will be understood that maintenance of a pre-set constant duration of the OFF pulses, corresponding to the teat-cup liner collapsed and no milk-flow phase of milking, may be achieved in a pulsation controller by mechanical means or by electrical means other that the electronic means including a microcomputer of the specific embodiment of the invention described above. However, the accuracy of control, constancy over a long working period and variety of data displayed to the user, is difficult to achieve by other means.

## Claims

1. A pulsation controller, for supplying alternate ON and OFF control pulses to a pulsator, of automatic milking apparatus, the ON pulses corresponding to the supply of vacuum pulses to a teat cup and the OFF pulses corresponding to the supply of atmosphere pressure pulses thereto, having means for varying the pulse cycle rate of ON and OFF pulses and including means for maintaining constant the duration of OFF pulses with the variation of the pulse cycle rate.

2. A pulsation controller as claimed in Claim 1, including means for presetting the duration of the OFF pulses to be maintained constant at a plurality of alternative preferred durations.

3. A pulsation controller as claimed in Claim 1 or Claim 2, for operation according to the following equation:

$$\left( \frac{A + B}{A + B + C + D} \right) \% + 5 \left( 20 - \frac{R \times (C + D)}{3} \right)$$

where A, B, C and D are the intervals defined herein, R is the pulse rate in cycles per minute and (C+D) is the combined interval of no milk flow which is maintained constant.

4. A pulsation controller as claimed in any one of Claims 1 to 3, providing in sequence four outputs of alternate ON and OFF control pulses in quadrature.

5. A pulsation controller as claimed in any one of Claims 1 to 4, including a microcomputer, in which the timing of ON and OFF control pulse intervals is effected by a microcomputer programme.

6. A pulsation controller as claimed in Claim 5, including a plurality of registers and including means for establishing interrupts at regular intervals, in which an interval is set by loading a register with a number corresponding to a number of interrupt intervals and decrementing to zero the register at successive interrupts.

7. A pulsation controller as claimed in Claim 5 or Claim 6, including a real time clock unit connected to the microcomputer by a data path.

8. A pulsation controller as claimed in claim 7, in which the data path is also connected to a display driver controlling displays for the pulse rate and OFF pulse duration values.

9. A pulsation controller as claimed in any one of Claims 5 to 8, in which the pulse rate and OFF pulse duration values may be changed from a keypad connected to enter data at an input port of the microcomputer.

10. An automatic milking apparatus including a pulsation controller as claimed in Claim 1.

11. A method of automatic milking using apparatus as claimed in Claim 10.

FIG.1.

FIG.2.

FIG. 3.

FIG. 4.